Europäisches Patentamt

European Patent Office

Office européen des brevets

(11) Veröffentlichungsnummer: **0 207 189**
A2

(12) # EUROPÄISCHE PATENTANMELDUNG

(21) Anmeldenummer: 85111829.9

(22) Anmeldetag: 18.09.85

(51) Int. Cl.⁴: **F 16 N 19/00**
**F 16 N 7/34, F 16 N 21/02**

(30) Priorität: 05.07.85 HU 261885

(43) Veröffentlichungstag der Anmeldung:
07.01.87 Patentblatt 87/2

(84) Benannte Vertragsstaaten:
AT BE CH DE FR GB IT LI LU NL SE

(71) Anmelder: Kiss, Jozsef
Bikaza M. u. 2.
H-2225 Üllö(HU)

(72) Erfinder: Kiss, Jozsef
Bikaza M. u. 2.
H-2225 Üllö(HU)

(74) Vertreter: Patentanwälte Viering & Jentschura
Steinsdorfstrasse 6
D-8000 München 22(DE)

(54) **Schmierbüchse, vorzugsweise aus Kunststoff.**

(57) Schmierbüchse, vorzugsweise aus Kunststoff, mit einem Außengewinde (2), einem Schmierkopf (1), der als Fortsetzung Außengewindes (2) eine zylindrische oder annähernd zylindrische Fläche aufweist, und mit einer durch die Symmetrieachse der Schmierbüchse hindurchgehenden Öffnung (8). In der Schmierbüchse, vorzugsweise im Inneren des Schmierkopfes (1), sind an zwei Seiten der Symmetrieachse aus demselben Marterial wie der Schmierbüchse bestehende Ansätze (3) ausgebildet, welche flexibel aneinander anpepaßt sind, so daß der zwischen den Ansätzen (3) eingeschlossene Luftspalt in der Ruhelage vollständig geschlossen ist.

FIG 1.

EP 0 207 189 A2

— 1 —

Schmierbüchse, vorzugsweise aus Kunststoff

Die Erfindung betrifft eine Schmierbüchse, die vorzugsweise aus Kunststoff hergestellt ist und die anhand ihrer einfachen Ausbildung sehr wirtschaftlich produziert werden kann, und da sie über keinen beweglichen Bauteil, z.B. eine Kugel verfügt, ist die Gefahr ihrer Beschädigung praktisch ausgeschlossen.

Aus der US-PS 4 067 417 ist eine aus einem Stück gegossene Kunststoff- -Schmiervorrichtung bekannt, deren Rückschlagventil nicht am Eingang der Vorrichtung, sondern am Ausgang angeordnet ist, wobei die Vorrichtung durch den hydrostatischen Druck des Schmierstoffes innerhalb des Vorrichtungskörpers in Betriebslage gehalten ist. Das letzterwähnte ist weiterhin auch durch die an der Außenfläche des Körpers befindlichen Umfangsrippen gewährleistet, die zwangsweise in eine im voraus gebohrte Öffnung an der Innenfläche eingepreßt werden.

Der Nachteil dieser Schmiervorrichtung liegt darin, daß zwar die Schließelemente des Rückschlagventils durch den hydrostatischen Druck im geschlossenem Zustand gehalten sind, die Außenwandung des Rückschlagventils aber nur eine sehr geringe Wandstärke aufweist, so daß diese durch mehrmalige Schmiervorgänge leicht deformiert werden kann und dadurch ein vollständiges Schließen der Rückschlagventillippen nicht gewährleistet ist. Aus diesen Gründen ist es verständlich, daß sich diese Schmiervorrichtung in der technischen Praxis in den vergangenen Jahren nicht durchgesetzt hat.

II/li                                                                 - 2 -

Weiterhin ist aus der US-PS 2 922 435 eine Schmiervorrichtung bekannt, welche in die Schmierstelle über ein Schraubengewinde eingeschraubt werden kann und über eine durch den ganzen Körper durchlaufende Öffnung verfügt, deren der Schmierstelle näher liegendes Ende von einem Kugelflächenelement abgeschlossen ist, welches an einer aus dem gleichen Material wie der Körper bestehenden Brücke befestigt ist, so daß ein monolithisch Einheit zwischen der Brücke und dem Körper gebildet ist.

Diese technische Lösung hat den Nachteil, daß die erwähnte Brücke bei mehrmaligen Schmiervorgängen ihre Flexibilität verliert und dadurch das Kugelflächenelement nicht mehr auf das Ende der Durchgangsöffnung gepreßt wird. Eine derartige Beschädigung ist nicht so sehr aus dem Gesichtspunkt der Notwendigkeit des Austausches des Schmierelementes von Nachteil, sondern vielmehr aus dem Gesichtspunkt, daß wenn eine derartige Beschädigung auftritt, diese insbesondere im Ruhezustand der zu schmierenden Maschine oder Maschinenteile nicht immer wahrgenommen werden kann, und der Abfluß bzw. die vollständige Entfernung des Schmierstoffes während des Betriebes zu bedeutenden Beschädigungen führen kann.

Mit anderen Worten gesagt: es ist vorstellbar, daß beim Schmieren durch Füllen eines beschädigten Schmierelementes nicht wahrgenommen werden kann, ob die Funktionstüchtigkeit des Schmierelementes noch gegeben ist. Dies kann dann erst beim Anlassen der Maschine festgestellt werden, was aber nicht unbedingt kontrolliert wird, so daß die Gefahr einer Beschädigung besteht.

Die Aufgabe der vorliegenden Erfindung besteht darin, eine Schmierbüchse, die vorzugsweise aus Kunststoff hergestellt ist, zu schaffen, welche die vorerwähnten nachteiligen Eigenschaften nicht aufweist und einfach herstellbar ist, und über kein Beschädigungen verursachendes Bauteil verfügt, dabei aber ein vollständiges Schließen auch nach großen Standzeiten gewährleistet und bei der eine Beschädigung des Schließelementes praktisch ausgeschlossen ist.

Im Sinne der Erfindung wird diese Aufgabe dadurch gelöst, daß in der Büchse, vorteilhafterweise im Inneren des Schmierkopfes an beiden Seiten der Symmetrieachse aus dem Material der Büchse bestehende und in das Innere der Büchse hineinreichende Ansätze ausgebildet sind, die zwischen sich einen Schnabel begrenzen und die derart flexibel aneinander angepaßt sind, daß der zwischen den Ansätzen bestehende Luftspalt in der Ruhelage vollständig verschlossen ist. Die Ebene des durch die Ansätze gebildeten bzw. verschlossenen Luftspaltes fällt mit der Symmetrieachse der Büchse zusammen. Die Begrenzung des zu der Schmierstelle näher liegenden Endes der Ansätze liegt in einer zur Symmetrieachse senkrechten Ebene und die Begrenzung des zur Schmierstelle entfernteren anderen Endes der Ansätze verläuft in einer gegenüber der Symmetrieachse schrägen Ebene, vorteilhafterweise mit einer 45° Grad-Neigung, zur Symmetrieachse. Die erfindungsgemäße Schmierbüchse zeichnet sich ferner dadurch aus, daß zwischen dem Gewindeteil und dem Schmierkopf Preßflächen angeordnet sind, deren Außenflächen als Sechskant ausgebildet sein können.

Die erfindungsgemäße Lösung wird nachstehend anhand einer vorteilhaften Ausführungsform näher erläutert. In der Zeichnung zeigt:

Fig. 1 den Längsschnitt einer erfindungsgemäßen Schmierbüchse,

Fig. 2 den Längsschnitt durch den Schmierkopf entlang des Luftspaltes und

Fig. 3 die Vorderansicht des Schmierkopfes.

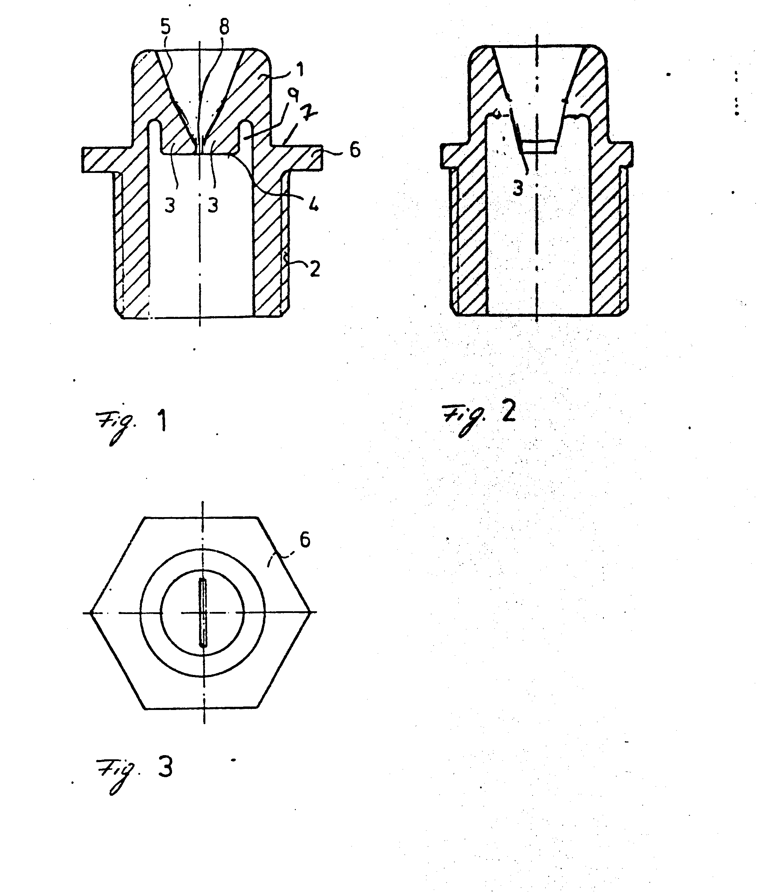

Die aus Fig. 1 ersichtliche Schmierbüchse besteht aus Kunststoff und ist im wesentlichen zylinderförmig ausgebildet. Der in ein Maschinenteil im Bereich einer Schmierstelle einzusetzende Teil der Schmierbüchse ist an seinem Außenumfang mit einem Schraubgewinde 2 versehen. Das von der Schmierstelle abgewandte Ende des Schraubgewindes 2 wird durch sog. Preßflächen 6 begrenzt, die in Form eines Sechskantes ausgebildet sind und mit ihrem Umfangsrand über das Schraubgewinde 2 bundartig vorstehen. Die dem Schraubgewinde 2 zugewandte Stirnfläche der Preßflächen 6 kann als Anschlag dienen.

Der mit dem Schraubgewinde 2 versehene Teil der Schmierbüchse ist zur Schmierstelle hin offen.

Über die dem Schraubgewinde 2 abgewandte Fläche 7 vorstehend ist der als

Schmierkopf 1 bezeichnete Teil der Schmierbüchse ausgebildet. In dem Schmierkopf 1 sind zwei in das Innere der Schmierbüchse hineinragende Ansätze 3 ausgebildet, die zwischen sich im Bereich der Symmetrieachse der Schmierbüchse einen Luftspalt 8 einschließen. Die der Schmierstelle zugewandte innere Begrenzung 4 der Ansätze 3 ist derart ausgebildet, daß ihre Begrenzungsebene senkrecht zur Symmetrieachse der Schmierbüchse verläuft. Die zur Schmierstelle entferntere äußeren Begrenzungen 5 der Ansätze 3 ist dagegen schräg zur Symmetrieachse verlaufend angeordnet, sodaß diese Begrenzungen 5 zwischen einander einen sich zum Luftspalt hin verjüngenden Keilspalt einschließen. Im Bereich des Luftspaltes 8 gehen die schräglaufende Begrenzungen 5 in einen parallel zur Symmetrieachse verlaufenden Abschnitt über, der seinerseits senkrecht in die Begrenzung 4 übergeht. Der zwischen den Begrenzungen 4 und 5 gebildete parallel zur Symmetrieachse verlaufende Abschnitt dient dazu, daß die Ansätze 3 in ihrer Schließstellung über eine möglichst große Abdichtfläche aneinanderstoßen.

Die Ansätze 3 ragen in den Innenraum der Schmierbüchse derart hinein, daß zwischen ihnen und der Umfangswandung der Schmierbüchse im Bereich der Preßflächen 6 rings der Ansätze eine kammerartige, zur Schmierstelle hin offene Ausnehmung 9 gebildet ist, durch welche beim Einsetzen eines Schmiergerätes in den äußeren Keilspalt zwischen die Ansätze das Auseinanderspreizen der Innenenden der Ansätze 3 und damit das Öffnen des Luftspaltes 8 ermöglicht ist.

Von den Ansätzen 3 und dem Luftspalt 8 wird daher ein Innenschnabel ausgebildet, so daß beim Herausnehmen des Schmiergefäßes aus dem äußeren Keilspalt der Luftspalt 8 durch das Zurückfedern der Ansätze 3 und durch die Einwirkung des Druckes an den parallel zur Symmetrieachse verlaufenden inneren Seitenbegrenzungsflächen der Ansätze 3 vollständig und dicht geschlossen wird. Dabei wird die Schließwirkung noch dadurch erhöht, daß durch die Geometrie der Ansätze der auf die zur Symmetrieachse senkrechte Begrenzungsfläche 4 einwirkende Druck die Ansätze 3 derart zu verdrehen versucht, daß der Luftspalt 8 noch fester geschlossen wird und damit die Dichtung zusätzlich erhöht wird.

Die zur Symmetrieachse schräg verlaufenden Begrenzungen 5, die bei einer vorteilhaften Ausführungsform der erfindungsgemäßen Schmierbüchse in einer

Neigung von 45° zur Symmetrieachse verlaufen, erleichtert die Einführung des den Schmierstoff enthaltenden Gefäßes, da die schräg verlaufenden Begrenzungen 5 entsprechend der Wirkung einer schiefen Ebene, ohne eine große Kraft aufbringen zu müssen, ein von der Symmetrieachse weg gerichtetes Ausschwenken der Ansätze 3 ermöglicht.

6

## ANSPRÜCHE

1. Schmierbüchse, vorzugsweise aus Kunststoff, mit einem Außengewinde (2) und einem Schmierkopf (1), der als Fortsetzung des Außengewindes (2) eine zylindrische oder annähernd zylindrische Fläche aufweist, und mit einer durch die Symmetrieachse der Schmierbüchse hindurchgehenden Öffnung (8), dadurch gekennzeichnet, daß in der Schmierbüchse, vorzugsweise an der Innenseite des Schmierkopfes (1) zu beiden Seiten der Symmetrieachse aus demselben Material wie die Schmierbüchse bestehende Ansätze (3) ausgebildet sind, welche flexibel derart aneinander angepaßt aneinanderliegen, daß der zwischen den Ansätzen (3) bestehende Luftspalt (8) in der Ruhelage vollständig geschlossen ist.

2. Schmierbüchse nach Anspruch 1, dadurch gekennzeichnet, daß die Ebene des von den Ansätzen (3) gebildeten bzw. geschlossenen Luftspaltes (8) mit der Symmetrieachse der Schmierbüchse zusammenfällt.

3. Schmierbüchse nach Anspruch 1 oder 2, dadurch gekennzeichnet, daß das der Schmierstelle näher liegende Ende (4) der Ansätze (3) in einer zu der Symmetrieachse senkrechten Ebene, und das andere Ende (5) der Ansätze (3) in einer zur erwähnten Symmetrieachse um 45° geneigten Ebene angeordnet sind.

4. Schmierbüchse nach einem der Ansprüche 1 bis 3, dadurch gekennzeichnet, daß zwischen dem Gewindeteil (2) und dem Schmierkopf (1) Preßflächen (6) angeordnet sind, welche einen Sechskant bilden.

0207189

Fig. 1

Fig. 2

Fig. 3